# EUROPÄISCHE PATENTSCHRIFT

(11) **EP 1 396 517 B1**
(45) Veröffentlichungstag und Bekanntmachung des Hinweises auf die Patenterteilung: **13.04.2011**
(21) Anmeldenummer: 03018068.1
(22) Anmeldetag: 08.08.2003
(51) Int. Cl.: C08J 3/24, C08F 8/02

(54) **Verfahren zur Herstellung von alkylierten N- bzw. Amino-, Ammonium- oder spirobicyclischen Ammoniumgruppen haltigen, vernetzten Polymeren**
Preparation of alkylated N or amino or ammonium or spirobicyclic ammonium groups containing cross-linked polymers
Préparation de polymères réticulés contenant des groupes N ou amino ou ammonium ou ammonium spirobicyclique, alcoylés

(30) Priorität: 03.09.2002 AT 13102002
(43) Veröffentlichungstag der Anmeldung: 10.03.2004
(73) Patentinhaber: DSM Fine Chemicals Austria Nfg GmbH & Co KG, 4021 Linz (AT)
(72) Erfinder: Stanek, Michael, 4020 Linz (AT); Wagner, Marion, 4223 Katsdorf (AT); Schoppel, Gerhard, 4641 Steinhaus bei Wels (AT); Häubl, Georg, 4040 Linz (AT); Wressnegger, Ernst, 4030 Linz (AT); Raml, Walter, 4202 Hellmonsödt (AT)
(74) Vertreter: Habets, Winand

(56) Entgegenhaltungen:
- WO-A-02/22695
- WO-A-02/48209
- WO-A-95/34585
- WO-A-96/39449
- S. R. HOLMES-FARLEY, A.O.: "Colesevelam hydrochloride : Synthesis and testing of a novel polymer gel pharmaceutical" POLYMER PREPRINTS, Bd. 41, Nr. 1, 2000, - 2000 Seiten 735-736, XP0009022552
- C.M.PALEOS, G.MARGOMENOU-LEONIDOPOULOU, ANGELOS MALLIARIS: "organizational and aggregational characteristics of some monomeric and polymerized quaternary ammonium salts" MOL.CRYST.LIQ.CRYST.INC.NONLIN.OPT., Bd. 161, 1988, Seiten 385-394, XP009030769

## Beschreibung

Die Erfindung betrifft ein technisches Verfahren zur Herstellung von alkylierten N-bzw. Amino-, Ammonium- oder spirobicyclischen oder Ammoniumgruppen haltiger, vernetzter Polymere, die beispielsweise in der Medizin zur Senkung des Cholesterinspiegels durch Bindung der Gallensäuren bzw. von Gallensäuresalzen eingesetzt werden, wie etwa Colesevelam Hydrochlorid.

Die Herstellung dieser Polymere erfolgt dabei in mehreren Schritten, wie Vernetzung, Zerkleinerung, Alkylierung, Waschung mit mehreren Waschschritten zwischen den einzelnen Stufen und Trocknung.

Die bisher aus dem Stand der Technik, wie etwa aus WO 98/43653; WO 99/33452; WO 99/22721; US 5 496 545; EP 0 909 768; WO 99/34786; WO 98/29107; WO 00/32656, WO 02/22695, Polymer Preprints 2000, 41 (1), 735 u.s.w. bekannten Verfahren zur Herstellung von alkylierten, vernetzten N-bzw. Amino-, Ammonium- oder spirobicyclische Ammoniumgruppen haltigen Polymeren, beispielsweise durch Vernetzung von Polyallylaminhydrochlorid mit Epichlorhydrin, und anschließender Alkylierung, etwa mit (6-Bromhexyl)-trimethylammoniumbromid und 1-Bromdecan, leiden unter dem Umstand, für einen Produktionsprozess im technischen Maßstab nicht geeignet zu sein.

Beim ersten Verfahrensschritt, der Vernetzung führt eine unkontrollierte Aushärtung im Reaktionskessel zur Bildung eines Polymerblocks, wodurch Beschädigungen am Equipment, beispielsweise am Rührwerk auftreten können. Zusätzlich bestehen an eine technische Gelierungsapparatur hohe Anforderungen bezüglich einer effizienten Chargen-Zwischenreinigung.

Die Zerkleinerung des ausgehärteten Rohgels erfolgt laut Stand der Technik in relativ unkontrollierter Weise, etwa durch Zerrühren des Gelkörpers in einem Gefäß. Da nach diesem Schritt ungleich große Partikel vorliegen, ist eine Homogenität bei den folgenden chemischen Reaktionen und Waschschritten nicht gewährleistet, was zu erhöhter Nebenproduktbildung und schlechterer Wascheffizienz führt.

Eine Möglichkeit zur Herstellung von Partikelchen mit den gewünschten mechanischen Eigenschaften ist laut Stand der Technik die Suspensionspolymerisation, jedoch sind für dieses Verfahren zusätzliche Lösungsmittel erforderlich.

Die Waschung von Rohgel dient hauptsächlich zur Entfernung des im vorangegangen Schritt gebildeten anorganischen Salzes und erfolgt laut Stand der Technik mittels Wasser und eventuell nachfolgend mit einem Alkohol, wie Isopropanol oder Methanol. Dabei wirkt sich sehr nachteilig aus, dass Rohgele sehr stark mit Wasser quellen (5 - 40 fach) und es sich somit um großvolumige und unwirtschaftliche Verfahrensschritte handelt. Zusätzlich erschwerend wirken sich die sehr schlechten Filtrationsleistungen dieser Gele aus. Da das Wasser im Folgeschritt (Alkylierung) stört, wird es bei einigen Verfahren mit Hilfe von Isopropanol verdrängt. Damit taucht jedoch ein zusätzliches Lösungsmittel im Prozess auf, was u.a. die Implementierung einer separaten Lösungsmittelaufarbeitung mit sich bringt.

Die Trocknung des Rohgels im wasserfeuchten Zustand wird laut Stand der Technik als sehr mühsam mit typischen Trocknungszeiten von 1 Woche beschrieben. Isopropanol-feuchtes Rohgel ist unter Inkaufnahme des schon beschriebenen Nachteils eines zusätzlich erforderlichen Lösungsmittels leichter zu trocknen. Neben dem allgemeinen Nachteil einer Trocknung als aufwändigen Verfahrensschritt, kommt bei der Rohgel-Trocknung noch dessen hohe Oxidations-Empfindlichkeit zum Tragen. Rohgel enthält nämlich im Gegensatz zum alkylierten Endprodukt unprotonierte Aminogruppen, die mit Spuren von Sauerstoff Nebenprodukte bilden können.

Der nachfolgende Schritt ist die Alkylierung beispielsweise mit Bromodecan und (6-Brom-hexyl)-trimethylammoniumbromid. Bei der Herstellung von (6-Brom-hexyl)-trimethylammoniumbromid sind laut Stand der Technik, wie in Synth. Commun. (1999), 29 (14), 2393-2398 beschrieben, die Ausbeuten mit 78% niedrig, die Reaktionszeiten mit 24 Stunden sehr lang und die verwendeten Lösungsmittel, wie in diesem Fall Tetrahydrofuran, welches bei einer Lösungsmittelaufarbeitung sehr stark zur Peroxidbildung neigt, prozess-technisch unvorteilhaft und zudem teuer. Andere Herstellmethoden wie in A. Gray et al., J. Am. Chem. Soc. 77, 3648 (1955) beschrieben, weisen zwar bessere Rohausbeuten auf, haben aber den Nachteil der ebenfalls langen Reaktionszeit von einem Tag, des benötigten hohen Überschusses an Dibromhexan (1,5 fach) und der Verwendung von Benzol als Lösungsmittel, welches sowohl für Mensch als auch Umwelt schädlich ist. Aufgrund der geringen Qualität des Rohproduktes muss hier außerdem aus tert-Butanol umkristallisiert werden, was einen zusätzlichen Aufwand für eine Lösungsmittelaufarbeitung nach sich zieht. Bei der Alkylierung handelt sich um eine heterogene Reaktion, bei der die Teilchengröße und auch die Korngrößenverteilung des eingesetzten Rohgels eine große Rolle spielen. Diesem Umstand wird bei bisherigen Alkylierungsverfahren nicht Rechnung getragen, sodass während der diffusionskontrollierten Reaktionen unkontrollierte Mengen an halogenhaltigen Nebenprodukten, wie beispielsweise etwa Chlordecan und/oder Chloroquat, und bei der Verwendung von Methanol als Lösungsmittel in Kombination mit wässriger Natronlauge Nebenprodukte, wie Methoxydecan und/oder Methoxyquat u.s.w. entstehen. Ein weiterer Nachteil bisher üblicher Alkylierungsverfahren sind die unbefriedigenden Alkylierungsausbeuten und langen Reaktionszeiten.

Bei den Verfahren nach Stand der Technik treten auf Grund der unterschiedlichen Teilchengröße teilweise auch extrem lange Filtrationszeiten (z.B. 24 Stunden) bei den nachfolgenden Waschschritten auf. Außerdem muss der beträchtliche Anteil an flüchtigen organischen Verunreinigungen aus den Polymeren bzw. Gelen anschließend durch mehrere Alkohol/NaCl-Wäschen oder Alkohol-Wäschen beseitigt werden.

WO02/48209 beschreibt einen Prozess for die Produktion eines mit Epichlorhydrin venetzte Polyallylamine Hydrochlorid einschliesslich der Reinigung des alkylierten Gels mit Methanol. Die Methanolwäsche erfolgt jedoch durch 4-malige Suspension des Gels unter Rühren. Diese Verfahrensweise ist zwar für den Laborbedarf geeignet, führt jedoch bei industrieller Durchführung zu erheblichem Lösungsmittel bedarf. WO96/39449 und WO95/34585 beschreiben auch jeweils einen Prozess bei dem die Wäsche des alkylierten Gels durch Suspension in Chargen durchgeführt wird und folglich auch große Mengen Lösungsmittel verwendet werden.

Da das Quellverhalten der Gele während der einzelnen Waschschritte relativ stark schwankt und der Trockensubstanzgehalt von Gelen im allgemeinen sehr gering ist (zwischen 8 - 40 %), ist die Anordnung und die Auswahl der Wascheinrichtungen von besonderer Bedeutung, um einerseits den Durchsatz hoch und um andererseits den Lösungsmittelverbrauch der Waschlösungen gering zu halten. Einen weiteren Punkt stellt die Lösungsmittelaufbereitung dar.

Aufgabe der vorliegenden Erfindung war es demnach, ein Verfahren zur Herstellung alkylierter N-bzw. Amino-, Ammonium oder spirobicyclische Ammoniumgruppen haltiger, vernetzter Gele bzw. Polymere zu finden, das für einen Produktionsprozess im technischen Maßstab geeignet ist. Ziel waren insbesondere technische Prozesse zur Herstellung von Rohgelen (Vernetzung), deren Waschung, Trocknung und Alkyllerung, Herstellung von quaternären Halogen-alkyl-ammoniumsalzen, wie etwa (6-Brom-hexyl)-trimethylammoniumbromid, sowie die konsequente Abstimmung dieser Prozesse aufeinander, um schließlich zu einem möglichst einfachen und effizienten Herstellprozess unter Gewährleistung der Qualitätsanforderungen (möglichst geringe Bildung von Nebenprodukten) und hoher Ausbeute zu kommen.

Unerwarteterweise konnte diese Aufgabe durch einen Herstellprozess gelöst werden, bei dem nicht nur optimale Einzelschritte zur Vernetzung, Rohgelzerkleinerung, Gelwaschung, Herstellung von Alkylierungsreagenzten und Alkylierung gefunden wurden, sondern auch gleich ein ganzer Schritt und ein Lösungsmittel völlig eliminiert werden konnten.

Gegenstand der erfindung ist daher ein Verfahren zur Herstellung alkylierter N-bzw. Amino-, Ammonium oder spirobicyclische oder Ammoniumgruppen haltiger, vernetzter Polymergele, dadurch gekennzeignet dass ein durch Polymerisation und Vernetzung erhaltenes, ausgeliertes und geschnittenes Rohgel
a) in einem Rührkessel oder in einer Rührfilternutsche mit Methanol gewaschen wird, wobei die Lösungsmittelzufuhr vom Bodem des Rührkessels oder der Rührfilternutshe oder über Kopf in den Rührkessel oder in die Rührfilternutsche und die Absaugung des verbrauchten Waschmediums Ober ein Tauchrohr erfolgt und
b) das so gewaschene Rohgel im Anschluss daran mit einem Alkylator alkyliert wird, worauf
c) eine Methanol-/Natriumchloridwäsche in einer kontinuierlich betriebenen Waschkolonne oder in einem Waschturm oder Rührkessel durchgeführt wird, wobei der Gelkuchen nach Filtration der Gelsuspension als statisches oder gerührtes Bett vorliegt und die Methanol-/Natriumchloridlösung zufuhr vom Boden her erfolgt und die Absaugung der überstehenden Waschflüssigkeit über ein Tauchrohr erfolgt, und sodann
d) eine Natriumchloridwäsche und eine Wasserwäsche durch Besprühen des Gelbettes mit der Waschlösung oder durch Suspensionswäsche in einer Rührfiltermutsche oder in einem Rührkessel oder in einer kontinuierlich betriebenen Waschkolonne durchgeführt wird.

Bei dem erfindungsgemäßen Verfahren werden alkylierte, vernetzte, N-bzw. Amino-, Ammonium- oder spirobicyclische Ammoniumgruppen haltige Polymere hergestellt.

Bei diesen Polymeren handelt es sich um Polymere, die beispielsweise in WO 00/32656, WO 00/38664, WO 99/33452, WO 99/22721, WO 98/43653, WO 02/22696, US 5 624 963 und US 5 496 545, sowie in Polymer Preprints 2000, 41 (1), 735 beschrieben sind.

Für das erfindungsgemäße Verfahren eignen sich insbesondere kationische Polymere. Zu den kationischen Polymeren gehören u.a. solche Polymere, die ein Amin-N-Atom enthalten, wie etwa primäre, sekundäre oder tertiäre Amingruppen oder Salze davon, quaternäre Ammoniumgruppen und/oderspirobicyclische Ammoniumgruppen. Zusätzliche kationische Gruppen beinhalten Amidino, Guanldino, Imino u.s.w. Das kationische Polymer zeichnet sich dadurch aus, dass es beim physiologischen pH-Wert eine positive Ladung aufweist.

Beispiele für geeignete kationische Polymere beinhalten Polyvinylamine, Polyallylamine, Polydiallylamine, Polyvinylimidazole, Polydiallylalkylamine, Polyethylenimine u.s.w., sowie Polymere enthaltend die aus beispielsweise WO 00/32656, Seite 7f.; WO 98/43653, Seite 4f.; US 5,496,545, Spalte 2 bis 4; US 5,624,963; WO 98/29107 u.s.w. bekannten, sich wiederholenden Einheiten.

Die für das erfindungsgemäße Verfahren eingesetzten Polymere weisen weiters negativ geladene Gegenionen auf. Diese Gegenionen können organische oder anorganische Ionen oder Kombinationen davon sein. Geeignete Gegenionen beinhalten ebenfalls die aus dem bereits zitierten Stand der Technik bekannten Gegenionen. Beispiele für geeignete anorganische Ionen sind Halogenide, insbesondere Chlorid, Phosphate, Phosphite, Carbonate, Bicarbonate, Sulfate, Bisulfate, Hydroxide, Nitrate, Persulfate, Sulfite und Sulfide. Beispiele für geeignete organische Ionen sind Acetate, Ascorbate, Benzoate, Lactat, Fumarat, Maleat, Pyruvat, Citrate, Dihydrogencitrate, Hydrogencitrate, Propionat, Butyrat, Oxalate, Succinate, Tartrate, Cholate u.s.w..

In einem ersten Verfahrensschritt werden die Polymere, die durch Polymerisation der entsprechenden Monomere gemäß dem Stand der Technik erhalten werden können, vernetzt.
Geeignete Vernetzungsmittel beinhalten die aus dem bereits zitierten Literaturstellen bekannten Vernetzungsmittel. Beispiele dafür sind Epichlorhydrin, Succinyldichlorid, Ethylendiamin, Toluoldiisocyanat, Diacrylate, Dimethacrylate, Methylenbisacrylamide, Dichlorethan, Dichlorpropan, u.s.w

Bevorzugt wird die Vernetzung auf 2 Reaktoren aufgeteilt, wodurch die gemäß dem Stand der Technik auftretenden Probleme, wie unkontrollierte Aushärtung im Reaktionskessel, vermieden werden. In einem geeigneten Mischreaktor, bevorzugt mit hochpolierter Edelstahloberfläche mit installierten CIP-Düsen (CIP = clean in place), wird eine wässrige Lösung des entsprechenden Polymers, wie etwa eine 50 %ige Polyallylaminhydrochlorid-Lösung mit Wasser und Natronlauge, bevorzugt 30 %ig bis 60%ig, gemischt. Dabei wird ein pH-Wert von 7.5 -14 eingestellt. Bevorzugt ist ein pH-Wert von 9,5-10,6 und besonders bevorzugt von 9,8 bis 10,4. Die Mischtemperatur liegt bei 0 bis 90°C, bevorzugt bei 5-30 °C und besonders bevorzugt bei 10-15°C.
Anschließend wird dieses Reaktionsgemisch bevorzugt in einen geeigneten Gelierreaktor überführt und das entsprechende Vernetzungsmittel, wie etwa Epichlorhydrin, zur Vernetzung chargiert. Zur Vorvernetzung wird das Reaktionsgemisch 1 bis 240 Minuten, bevorzugt 10 bis 120 Minuten und besonders bevorzugt 15 bis 30 Minuten gerührt. Zu kurzes Rühren führt zu einer zweiphasigen Reaktionsmischung und in der Folge zu einem inhomogenen Produkt, während zu langes Rühren zur unkontrollierten Aushärtung im Gelierkessel führt

Die vorvernetzte Mischung wird sodann in geeignete Aushärtebehälter abgefüllt und gemäß Stand der Technik durch Stehen lassen ausgehärtet.
Der Gelierreaktor und die mit vorvernetztem Gel in Kontakt gekommenen Rohrleitungen werden erfindungsgemäß mit Wasser gereinigt. Der Gelierreaktor besitzt zum Zwecke einer effizienten Reinigung bevorzugt eine hochpollerte Edelstahloberfläche sowie CIP-Düsen.

Das ausgehärtete Rohgel wird in eine definierte Form geschnitten. Die Zerkleinerung des Rohgels in eine definierte Form, bevorzugt in Würfeln mit einer Kantenlänge von 1 bis 3 mm, und mit definierter Korngrößenverteilung erfolgt bevorzugt gemäß der österreichischen Patentanmeldung A 1630/2001.
Durch die Zerkleinerung in eine definierte Form wird erfindungsgemäß die für die folgenden Reaktionsschritte und Waschschritte erforderliche. Homogenität gewährleistet.

Die Rohgelwäsche erfolgt erfindungsgemäß nach dem Schneiden des Blockgels auf Grund der Kompressibilität des Gels bevorzugt in einem Rührkessel oder in einer Rührfiltemutsche, wobei besonders bevorzugt die Lösungsmittelzufuhr vom Boden des Rührkessels oder der Rührfilternutsche und die Absaugung des verbrauchten Waschmediums über ein Tauchrohr erfolgt, bis ein bestimmter Grenzwert an Wasser erreicht wird. Bei Bedarf kann im Falle der Bodenzuspeisung auch gerührt werden.

Die Zufuhr des Lösungsmittels kann jedoch auch über Kopf in den Rührkessel oder in die Rührfilternutsche erfolgen.
Erfindungsgemäß erfolgt die Rohgelwaschung genau mit dem Lösungmittel, nämlich mit Methanol, in dem auch die Alkylierung durchgeführt wird.
Unerwarteterweise werden durch das Waschen mit ausschließlich Methanol gegenüber dem Stand der Technik (beispielsweise Polymer Preprints 2000, 41 (1), Seite 735-736) noch weitere Vorteile erzielt:
Durch das erfindungsgemäße Waschen mit Methanol anstatt mit Wasser und anschließend mit Isopropanol, wird die starke Quellung des Rohgels im Wasser vermieden. Weiters werden großvolumige und unwirtschaftliche Verfahrensschritte, die bei Verwendung von Wasser erforderlich sind, und schlechte Filtrationsleistungen der in Wasser gequollenen Gele vermieden.
Durch die Eliminierung von Isopropanol aus dem Prozess entfällt die ansonsten nötige Lösungsmittelaufarbeitung für Isopropanol. Im Gegensatz zur einfachen Destillation von Methanol ist die Aufarbeitung von Isopropanol verfahrenstechnisch nur sehr schwierig und aufwändig durchführbar. Dazu ist nämlich ein Membran-Verfahren notwendig oder eine Extraktivdestillation.
Eine zusätzliche Lösungsmittelaufarbeitung im Vergleich zum Stand der Technik ist nicht erforderlich, da Methanol bereits im Folgeschritt der Alkylierung wiederum enthalten ist.
Durch das erfindungsgemäße Waschen wird die Waschleistung durch Einsparung der Menge der gesamt erforderlichen Waschlösung verglichen mit o.g. Stand der Technik erhöht.

Weiters wird beim Waschen durch Absaugung der überstehenden Waschflüssigkeit mittels Tauchrohr aus dem Waschkessel im Gegensatz zur Verwendung von konventionellen Filtrationsapparaten, wie Zentrifuge oder Filternutsche, Equipment und Chargenzeit gespart.

Gemäß dem Stand der Technik erfolgt im Anschluss an das Waschen die Trocknung des Rohgels.
Erfindungsgemäß wird im Zusammenhang mit der oben beschriebenen Verwendung desselben Lösungsmittels, sowohl bei der Rohgelwaschung als auch bei der Alkylierung eine Trocknung des Rohgels überflüssig. Dadurch ergeben sich wiederum erhebliche Einsparungen an Equipment, Handling und Chargenzeit.

Im nächsten Schritt erfolgt die Alkylierung des Rohgels.
Bei der Durchführung der technischen Alkylierungsreaktion ist der Einsatz von Gel mit den entsprechenden mechanischen Eigenschaften, definierte Korngröße und enge Korngrößenverteilung, entscheidend. Weiters muss der Prozess so ausgelegt sein, dass diese Eigenschaften bei keinem Schritt verloren gehen. Dazu ist es notwendig das Gel vor mechanischer Beanspruchung möglichst zu schonen, beispielsweise durch drastische Reduktion von Rührzeiten. Unerwarteterweise wurden in der technischen Anlage bei gewissen Operationen, nur sehr kurze notwendige Rührzeiten im Minutenbereich ermittelt. Es wurde gefunden, dass eine kurze Zwangsmischung mittels Rührer, bei und nach Einbringung von Rohstoffen und Reagenzien stets erforderlich ist, anschließend jedoch die Konvektionsmischung durch Rückflusskochen ausreicht.

Bei der erfindungsgemäßen Alkylierung werden zu der in Methanol aufgerührten Geisuspension die entsprechenden Alkylatoren zugegeben.
Unter Alkylatoren sind Reaktanten zu verstehen, die, wenn sie mit einem vernetzten Polymer umgesetzt werden, bewirken, dass eine Alkylgruppe oder ein Derivat davon, wie etwa eine substituierte Alkylgruppe u.s.w., kovalent an ein oder mehrere der N-Atome im Polymer gebunden wird.
Geeignete Alkylatoren sind dabei Verbindungen der Formel RX, die eine Alkylgruppe oder ein Alkylderivat mit 1 bis 24 C-Atomen (R) aufweisen, die bzw. das an eine Abgangsgruppe (X) gebunden ist, wie sie aus dem bereits zitierten Stand der Technik bereits bekannt sind.

R ist demnach ein linearer, verzweigter oder cyclischer Alkylrest mit 1 bis 24 C-Atomen, bevorzugt mit 4 bis 20 C-Atomen, oder ein Alkylderivat, wie etwa eine C₁-C₂₀-, bevorzugt C₄-C₂₀-Hydroxyalkylgruppe, C₇-C₂₀-Aralkylgruppe, C₁-C₂₀-, bevorzugt C₄-C₂₀-Alkylammoniumgruppe oder C₁-C₂₀-, bevorzugt C₄-C₂₀-Alkylamidogruppe.
X ist eine elektrophile Abgangsgruppe, beispielsweise aus der Gruppe der Halogenide, wie etwa Chlorid, Bromid, Fluorid, Jodid oder beispielsweise eine Abgangsgruppe wie Epoxy, Tosylat, Mesylat oder Triflat. Der Alkylator kann dabei eine oder mehrere Abgangsgruppen enthalten.
Beispiele für bevorzugte Alkylatoren sind C₁-C₂₄-Alkylhalogenide, wie etwa n-Butylhalogenid, n-Hexylhalogenid, n-Decylhalogenid, n-Dodecylhalogenid, n-Tetradecylhalogenid, n-Octadecylhalogenid, u.s.w., C₁-C₂₄-Dihalogenalkane, wie etwa 1,10-Dihalogendecan, u.s.w., C₁-C₂₄-Hydroxyalkylhalogenide, wie etwa 11-Halogen-1-undecanol, u.s.w., C₁-C₂₄-Aralkylhalogenide, wie etwa Benzylhalogenid, substituierte Benzylhalogenide, u.s.w., C₁-C₂₄-Alkylepoxyammoniumsaize, wie etwa Glycidylpropyl-trimethyl-ammoniumsalz, u.s.w., C₁-C₂₄-Epoxyalkylamide, wie etwa N-(2,3-Epoxypropan)butyramid, N-(2,3-Epoxypropan)hexanamid, u.s.w., C₁-C₂₄- Halogen-alkyl-ammoniumsalze, wie etwa (4-Halogenbutyl)-trimethylammoniumsalz, (6-Halogenhexyl)-trimethylammoniumsalz, (8-Halogenoctyl)-trimethylammoniumsalz, (10-Halogendecyl)-trimethylammoniumsalz, (12-Halogendodecyl)-trimethyl-ammoniumsalz, u.s.w., Bevorzugte Alkylatoren sind Bromdecan und 6-Brom-hexyl-trimethylammonium-bromid.
Zur Herstellung von 6-Brom-hexyl-trimethylammoniumbromid sind bereits eine Vielzahl von Verfahren in der Literatur beschrieben, die jedoch alle diverse Nachteile, wie niedrige Ausbeuten, schlechte Qualität und/oder lange Reaktionszeiten, aufweisen. Ein Beispiel ist Mol. Cryst. Liq. Cryst. Inc. Nonlin. Opt. Bd. 161, 1998 385-394. Unerwarteterweise wurde nun ein Verfahren zur Herstellung von quaternären Halogen-alkyl-ammoniumsalzen, wie zum Beispiel 6-Bromo-hexyl-trimethyl-ammoniumbromid gefunden, das quaternäre Halogen-alkyl-ammoniumsalze in höheren Raum-Zeit-Ausbeuten, mit höherer Qualität unter Vermeidung von Nebenproduktbildung liefert.

Bei einem Verfahren zur Herstellung von quaternären Halogen-alkyl-ammoniumsalzen, wird Trimethylamin und ein Dihalogen-C₃-C₂₄-alkan in Ethylacetat bei einer Temperatur von -15 °C bis +100°C und bei einem Druck von 1 bis 10 bar umgesetzt, worauf das Reaktionsgemisch nach 5 bis 15 Stunden abgekühlt und filtriert wird und das so erhaltene quaternäre Halogen-alkyl-ammoniumsalz getrocknet wird.

Geeignete Dihalogen-C₃-C₂₄-alkane sind beispielsweise 1,3-Dibrompropan, 1,4-Dibrombutan, 1,5-Dibrompentan, 1,8-Dibromhexan u.s.w.. Bevorzugt wird 1,6-Dibromhexan eingesetzt.
Die Umsetzung erfolgt in Ethylacetat als Lösungsmittel. Es kann dabei Trimethylamin zu dem entsprechenden Dihalogen-C₃-C₂₄-alkan in Ethylacetat zudosiert werden oder auch umgekehrt das entsprechende Dihalogen-C₂-C₂₄-alkane Dihalogen-C₃-C₂₄-alkan zu Trimethylamin in Ethylacetat. Das Dihalogen-C₃-C₂₄-alkan wird in einem geringen Überschuss bezogen auf Trimethylamin eingesetzt. Bevorzugt ist ein Molverhältnis von Trimethylamin zu Dihalogen-C₃-C₂₄-alkan von 1:1,01 bis 1:1,10.
Die Reaktionstemperatur beträgt -15°C bis +100°C, bevorzugt 15 bis 70°C und besonders bevorzugt 30 bis 65°C. Die Temperatur kann dabei auch stufenweise mittels einer Temperaturrampe erhöht werden.
Die Umsetzung wird bei einem Druck von 1 bis 10bar durchgeführt.
Nach etwa 5 bis 15 Stunden wird das Reaktionsgemisch abgekühlt und filtriert. Das erhaltene Kristallisat wird mit Ethylacetat nachgewaschen und getrocknet. Halogenalkyl-ammoniumsalze, wie etwa 6-Bromo-hexyl-trimethylammonium-bromid werden in Ausbeuten von 95 bis 98% und in einer Reinheit von bis zu 100% erhalten und können somit direkt ohne weiter Aufarbeitung als Alkylierungsmittel eingesetzt werden.

Bevorzugt wird für die Alkylierung 6-Bromo-hexyl-trimethylammonium-bromid eingesetzt, das durch obiges Verfahren hergestellt wurde.

Bei der Alkylierungsreaktion können einer oder mehrere Alkylatoren zugesetzt werden.
Die Alkylatoren werden je nach gewünschtem Alkylierungsgrad eingesetzt. Die Synthese von Colesevelam Hydrochlorid soll beispielsweise eine Polymerstruktur liefern, bei der ungefähr 12 % der Amine des Polyallylamingerüstes vernetzt, ungefähr 40 % der Amine des Polyallylamingerüstes mit Decylgruppen und ungefähr 34 % der Amine des Polyallylamingerüstes mit Trimethylammonium-hexyl-gruppen versehen sind, sowie ungefähr 14 % der Amine des Polyallylamingerüstes als primäre Amine bestehen bleiben (Polymer Preprints 2000, 41 (1), 735-736). Die Bestimmung der unterschiedlichen Alkylierungsgrade kann sehr einfach im Vergleich zu einer ausgewählten Referenzsubstanz durch Analyse des C/N-Verhältnisses und der Anzahl der freien Amine (titrierbare Amine) bestimmt werden.
Die Zugabe der Alkylatoren erfolgt bei einer Temperatur zwischen 5 und 90°C und bei einem Druck von 1-3 bar.
Vor oder nach der Zugabe kann beispielsweise das in Methanol suspendierte Gel auf 25 bis 90°C, bevorzugt auf 35 bis 65°C und besonders bevorzugt auf Siedetemperatur von Methanol erhitzt werden.
Bevorzugt wird das Rührwerk des Alkylierungskessels während der Aufheizphase zur Schonung des Gels nur periodisch (z.B. alle 30 Minuten) und jeweils nur für kurze Zeit (z.B. 2 - 3 Minunten) eingeschaltet.
Nach Zugabe des oder der Adkylatoren wird das Reaktionsgemisch noch durchgemischt, wobei die Durchmischzeit zwischen 1 und 60 Minuten, bevorzugt 5 bis 50 Minuten und besonders bevorzugt 10 bis 40 Minuten liegt.

Anschließend wird mit der Zugabe an Base begonnen. Als Base eignen sich hierfür in Abhängigkeit vom verwendeten Lösungsmittel NaOH, KOH, NH₄OH, LiOH, Ca(OH)₂, Ba(OH)₂, NaH und NaNH₂. Bevorzugt wird NaOH eingesetzt.
Die Zugabe der Base erfolgt bevorzugt in mehreren Portionen.
Bevorzugt wird zur Schonung des Gels das Rührwerk des Alkylierungskessels nur während der Chargierung der Base und für kurze Zeit danach (z.B. 10 Minuten) eingeschaltet, Insbesondere wurde gefunden, dass die konvektive Durchmischung aufgrund des Rückflusskochens während eventueller längerer Nachreaktionszeiten (typ. 8 - 10 Stunden) völlig ausreicht.
Die Alkylierungsreaktion ist beendet, wenn mindestens 95 bis 99 % der Alkylatoren abreagiert sind, was erfindungsgemäß im Vergleich zum Stand der Technik um 30 % schneller erfolgt.

Nach Ende der Reaktion wird das Gel in Methanol durch Zugabe einer Säure reprotoniert.
Bevorzugt wird zur Schonung des Gels das Rührwerk des Alkylierungskessels nur während der Chargierung der Säure und für kurze Zeit danach (z.B. 10 Minuten) eingeschaltet.

Als Säuren für die Reprotonierung eignen sich alle Mineralsäuren und organische Säuren, die zu den bereits angeführten Gegenionen führen.
Dies sind beispielsweise HCl, HBr, H₂SO₄, H₃PO₄, HNO₃ u.s.w. sowie Ameisensäure, Essigsäure, Oxalsäure, Zitronensäure, Brenztraubensäure, Maleinsäure, Fumarsäure, Propionsäure, Weinsäure u.s.w..
Gewünschtenfalls kann die Reprotonierung des alkylierten Gels jedoch auch am Ende einer oder mehrerer Methanol- und/oder Methanol/Salz-, beispielsweise NaCl, - Wäschen erfolgen.

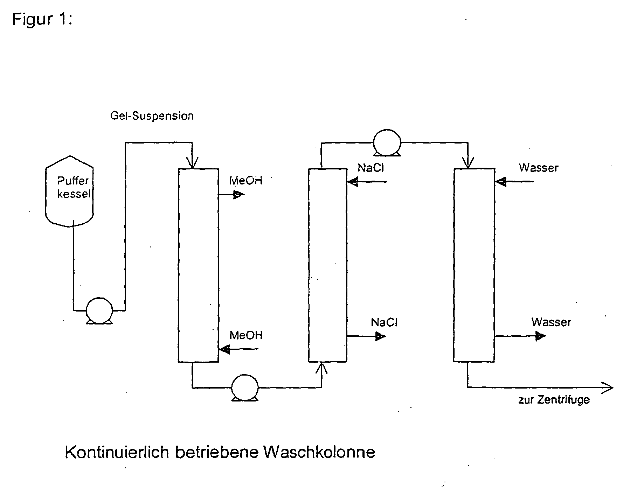

Die Methanol-/Natriumchloridwäsche in Schritt c) kann efindungsgemäß nach der Alkylierung, wie für die Rohgelwäsche beschrieben, erfolgen. Besonders bevorzugt erfolgt die Waschung in einem Waschturm oder einem Rührkessel, wobei der Gelkuohen nach Filtration der Gelsuspension im statischen oder gerührten Bett vorliegt und die Methanol-/Natriumchloridlösung zufuhr vom Boden her erfolgt und die Absaugung des überstehenden waschflüssigkeit über ein Tauchrohr erfolgt, bis ein bestimmter Grenzwert an organischen Nebenprodukten erreicht wird. Sobald dieser erreicht wird, kann bei Bedarf der Gelkuchen bis zur Trockene filtriert werden. Gegebenenfalls kann der Gelkuchen in einer kontinuierlich betriebenen Waschkolonne gewaschen werden (Figur 1)

Um anschließend die Bromidionen der quaternären Ammoniumgruppierungen mit Chloridionen auszutauschen, erfolgt erfindungsgemäß nach der Methanol-/Natriumchloridwäsche die Waschung mit einer Natriumchloridlösung. Besonders bevorzugt wird eine Natriumchloridlösung verwendet, die eine geringere Konzentration als 2 molar aufweist (0.1 - 1.9 molar), um aufgrund des Dichteunterschiedes zwischen den mit organischem Lösungmittel gefüllten Gelteilchen und der Natriumchloridlösung kein Aufschwimmen zu bewirken. Im Bedarfsfall kann auch eine Natriumchloridlösung höherer Konzentration (bis konzentrierte Natriumchloridlösung) verwendet werden, um gezielt ein Aufschwimmen der Gelteilchen und dadurch ein Waschen im Gegenstrom in einer Kolonne zu steuern. Das Aufbringen der Natriumchlorldlösung auf das Gelbett erfolgt bevorzugt durch Besprühen, da dabei trotz einer beachtlichen Schrumpfung und dadurch Rissbildung im Gelbett eine effiziente Waschung gewährleistet ist. Das Aufdrücken der Waschlösung auf den Gelkuchen kann ebenfalls durchgeführt werden, jedoch wird mehr Waschlösung benötigt.
Die Wasserwaschung erfolgt bevorzugt in analoger Weise, wie die Natriumchlorid-waschung durch Besprühen. Im Falle der Wasserwäsche kann jedoch das gesamte Waschmedium auf das Gelbett aufgebracht und durch den Gelkuchen gedrückt werden.
Die Natriumchlorid- und Wasserwaschung kann jedoch auch durch Suspensionswäsche in einer Rührfilternutsche oder in einem Rührkessel erfolgen. Der letzte Waschschritt erfolgt dann bevorzug auf einer Filternutsche, einem Bandfilter oder einer Zentrifuge.

Gegebenfalls kann die NaCl- und Wasser-Waschung kontinuierlich durch Verwendung von in Serie geschalteter Kolonnen erfolgen (Figur 1).

Durch das erfindungsgemäße Verfahren, das sich aus den erfindungsgemäßen Schritten Waschen mit Alkohol unter Absaugung der überstehenden Waschlösung mittels Tauchrohr und Alkylierung werden die Nachteile der bisherigen aus dem Stand der Technik bekannten Verfahren vermieden. Ein besonderer Vorteil ist der Entfall eines gemäß Stand der Technik notwendigen Trockenschrittes vor dem Alkylierungsschritt.

Durch die erfindungsgemäße Gelwaschung, unter Berücksichtigung der physikalischchemischen Eigenschaften des Gels, wurde außerdem im Vergleich zum Stand der Technik (Polymer Preprints 2000, 41(1), 735) ein Waschverfahren gefunden, bei welchem der Lösungsmittelverbrauch und die Vermischung der verwendeten Lösungsmittel minimal und der Durchsatz pro Volumeneinheit hoch gehalten werden kann. Das Ergebnis ist, dass die zu verwendende Waschlösungsmittelmenge um bis zu 66 % reduziert und der Durchsatz verdoppelt werden kann.

Ein weiterer Vorteil des erfindungsgemäßen Gesamtverfahrens ist der höhere Gesamtdurchsatz durch Reduktion der Reaktionszeit um ca. 30 % (von ca. 20 h, bzw. 26 h gemäß Stand der Technik auf 14-16 h).

### Beispiel 1:

### Technische Herstellung eines mit Epichlorhydrin vernetzten Polyallylamin-hydrochlorides, Alkylierung und Waschung:

### Vernetzung:

Im Mischkessel R1 wurden unter Rühren 320,2 kg VE-Wasser und 236,0 kg 50 %ige Polyallylaminhydrochlorid-Lösung vorgelegt. Anschließend wurde mit Natronlauge (50 %ig) ein pH-Wert zwischen 9,8 - 10,4 eingestellt. Die erhaltene Mischung wurde 20 Minuten bei 20 °C gerührt, auf 13 °C abgekühlt und dann in den Gelierreaktor R2 transferiert. Dort wurden unter Rühren 2,36 kg Epichlorhydrin chargiert und 20 Minuten zur Homogenisierung weitergerührt. Zur Aushärtung wurde der Inhalt von R2 in ein Fass abgefüllt. Die Aushärtezeit betrug 18 Stunden. Der Gelierreaktor wurde mit 50 kg VE-Wasser gespült, um unerwünschtes Aushärten von Gelresten im Reaktor zu vermeiden. Die Ausbeute betrug 625 kg Rohgel (100 %).

### Schneiden und Waschen des ausgehärteten Rohgels (a):

1400 kg ausgehärtetes Rohgel wurden im Reinraum mittels Gelschneide-Apparat In den Reaktor R3 geschnitten (Quader mit ca. 2 x 2 x 2 mm Kantenlänge). Zum Suspendieren wurden 2920 kg Methanol chargiert, das Gel 20 Minuten aufgerührt und die Suspension in den Waschkessel R4 transferiert. Die Wasch-Mutterlauge wurde über ein Tauchrohr ausgedrückt. Es wurden insgesamt 3 Waschungen mit Methanol durchgeführt.

### Alkylierung (b):

Das gewaschene methanolfeuchte Rohgel wurde im Reaktor R4 in 1200 kg Methanol suspendiert und in den Alkylierungskessel R5 übergeführt. Zu dieser gerührten Suspension wurde eine Lösung von 376 kg (6-Bromhexyl)-trimethylammoniumbromid in 220 kg Methanol, sowie 260 kg 1-Bromdecan chargiert. Die Reaktionsmischung in R5 wurde auf 60 °C aufgeheizt, wobei zur Durchmischung bei bestmöglicher mechanischer Schonung der Gelpartikel das Rührwerk nur alle 30 Minuten für 2 - 3 Minuten eingeschaltet wurde. Es wurden bei 60 - 70 °C unter Rühren 53 kg Natronlauge (50 %) zugegeben und anschließend noch weitere 10 Minuten gerührt, bevor die Reaktionsmischung 2 Stunden unter Rückflusskochen belassen wurde. Auf diese Weise wurden insgesamt 4 Portionen Natronlauge chargiert. Die Nachreaktion erfolgte während der folgenden 8 Stunden Rückflusskochen bei 60 - 70 °C bei ausgeschaltetem Rührwerk.

### Reprotonierung:

Der Inhalt von R5 wurde unter Rühren auf 40 °C abgekühlt, 240 kg konzentrierte Salzsäure (34 %ig) chargiert und das Rührwerk nach weiteren 10 Minuten ausgeschaltet.

### Waschen des alkylierten Gels:

Die erhaltene Gelsuspension wurde in den Waschreaktor R6 transferiert und 4 mal unter Rühren mit je 1680 kg Methanol und 255 kg NaCl-Lösung (10,9 %) versetzt und nach 20 minütiger Rührzeit über ein Tauchrohr abfiltriert. Anschließend wurde der Gelkuchen auf einer Drucknutsche (F1) 6 Mal mit je 1800 - 3000 kg NaCl-Lösung (10,9 %) und 6 Mal mit je 1800 - 3000 kg VE-Wasser gewaschen.

### Trocknung:

Das Feuchtgel wurde laut dem Stand der Technik bis zu einem Trockenverlust von maximal 3 % getrocknet. Es wurden 1750 kg (100 %) Produkt mit einem Trocknensubstanzgehalt von max. 4 % erhalten.

### Lösungsmittelregeneration:

Die Destillation des Methanols erfolgte zweistufig. Die erste Stufe in der Kolonne K1 war eine Vordestillation mit sauer eingestelltem Feed zur Entfernung flüchtiger basischer Amine (Allylamin). In der Vorlage B1 wurden die basischen methanolischen Filtrate aus dem Waschkessel R4 mit den sauren Filtraten aus R5 gemischt und vor der Aufgabe auf K1 mittels Schwefelsäure auf einen pH < 2 gestellt. Das Vordestillat bestand aus einem Gemisch Methanol / Wasser. Dieses wurde in der zweiten Stufe mit der Kolonne K2 getrennt.

Ein Vergleichsbeispiel zur Herstellung von Coleveselam findet sich nach Stand der Technik in der Literatur Polymer Preprints 2000, 41 (1), Seite 735-736.

### Beispiel 2: Schritt a) Rohgelwäsche

### Vergleichsversuch gemäß Stand der Technik (siehe auch Vorschrift in Polymer Preprints 200041(1), 735):

Um 677 g getrocknetes und gewaschenes Rohgel herzustellen, wurden zwecks Suspensionsherstellung zum zerkleinerten Gel von 5300 g (das entspricht ca 4300 g Rohgel gemäß erfindungsgemäßen Verfahren) 10 Liter Wasser zugegeben. Anschließend wurde das Gel 3 Mal mittels Suspensionswasche mit 10, 15 und 20 Liter Wasser gewaschen, wobei jeweils 1 Stunde gerührt wurde. Anschließend wurde mit 17 I ispopronal gewaschen und das Gel nach Filtration auf einer Flitemutsche getrocknet. Die Ausbeute betrug 680 g.

### Rohgelwäsche gemäß erfindungsgemäßen Verfahren:

a): 4300 g des geschnittenen Rohgels wurden 3 Mal mit je 8600 g Methanol via Suspensionswäsche gewaschen. Anschließend wurde das Gel getrocknet, wobei man 662 g eines leichtgelblichen Granulats erhielt.
b): 4300 g des geschnittenen Rohgels wurden 3 Mal mit je 8600 g Methanol via Suspensionswäsche gewaschen. Nach Filtration wurde der erhaltenen Filterkuchen von 4268 g direkt für den nächsten Reaktionsschritt (Alkylierung) verwendet.
c): 4300 g des geschnittenen Rohgels wurden mit 27000 g Methanol so gewaschen, dass unter Rühren die Methanolmenge vom Boden des Rührkessels durch die Gelsuspension gepumpt wurde. Die überstehende Lösung wurde mittels Tauchrohr abgesaugt. Die erhaltene Gelsuspension von 6380 g wurde direkt für einen nächsten Reaktionsschritt (Alkylierung) verwendet.

**Tabelle 1: Gegenüberstellung der verwendeten Waschmengen bei gleicher Wascheffizienz:**

| | |
|---|---|
| Stand der Technik | 45 kg Wasser; 17 I Isopropanol |
| a) | 25.8 kg Methanol |
| b) | 25.8 kg Methanol |
| c) | 27 kg Methanol |

### Beispiel 3: Schritt c) Methanol-/NaCl-Wäsche:

### Vergleichsbeisplel: Stand der Technik (siche auch Vorschrift in Polymer Preprints 2000; 41(1), 735):

Um 727 g getrocknetes Colesevelam Hydrochlorid herzustellen, wurde das reprotonierte Gel mit 15.92 kg Methanol via Suspensions- oder Verdrängungswäsche gewaschen.

Methanol/NaCl-Wäsche gemäß erfindungsgemäßen Verfahren:
a): Basierend auf dem Ansatz mit einer Größe von 1900 g Rohgel (entspricht ca. 730 g getrocknetem Colesevelam Hydrochlorid) wurden 3 Suspensionswäschen mit je 5 kg (in Summe 15 kg) Methanol durchgeführt.
b): Basierend auf dem Ansatz mit einer Größe von 1900 g Rohgel (entspricht ca. 730 g getrocknetem Colesevelam Hydrochlorid) wurden 3 Suspensionswäschen mit je 4.4 kg (in Summe 13.2 kg) Methanol/NaCl (87/13 Gew.% = 90/10 Vol%; 2M NaCl-Lösung) durchgeführt.
c): Basierend auf dem Ansatz mit einer Größe von 1900 g Rohgel (entspricht ca. 730 g getrocknetem Colesevelam Hydrochlorid) wurden 5 Suspensionswäschen mit je 2.1 kg (in Summe 10.5 kg) Methanol/NaCl (87/13 Gew.% = 90/10 Vol%; 2M NaCl-Lösung) so durchgeführt, dass nach dem Absetzenlassen der Gelsuspension überschüssiges Methanol über dem Gelkuchen mittels Tauchrohr abgesaugt wurde.
d): Basierend auf dem Ansatz mit einer Größe von 1900 g Rohgel (entspricht ca. 730 g getrocknetem Colesevelam Hydrochlorid) wurde das Gel vom Boden her so gewaschen, dass in Summe nur 5.3 kg Methanol/NaCl (87/13 Gew.% = 90/10 Vol%) verbraucht wurden, um ein spezifikationsgerechtes Produkt herzustellen.

**Tabelle 2: Gegenüberstellung der verwendeten Waschmengen bei gleicher Wascheffizienz:**

| | |
|---|---|
| Stand der Technik | 15.9 kg Methanol |
| a) | 15.0 kg Methanol/NaCl |
| b) | 13.2 kg Methanol/NaCl |
| c) | 10.5 kg Methanol/NaCl |
| d) | 5.3 kg Methanol/NaCl |

### Beispiel 4: Schritt d) NaCl-Wäsche:

*Stand der Technik (siehe auch Vorschrift in* Polymer Preprints 2000; 41(1), 735*):* Um 727 g getrocknetes Colesevelam Hydrochlorid herzustellen, wurde das reprotonierte Gel nach erfolgter MeOH- bzw. MeOH/NaCl-Wäsche mit 43.2 kg 2M wässriger NaCl-Lösung via Suspensions- oder Verdrängungswäsche gewaschen.
a): Basierend auf dem Ansatz mit einer Größe von 1900 g Rohgel (entspricht ca. 730 g getrocknetem Colesevelam Hydrochlorid) wurden 6 Wäschen mit je 5.3 kg (in Summe 32 kg) 2M wässriger NaCl-Lösung durchgeführt, wobei nach jedem Waschschritt vollständig abfiltriert wurde.
b): Basierend auf dem Ansatz mit einer Größe von 1900 g Rohgel (entspricht ca. 730 g getrocknetem Colesevelam Hydrochlorid) wurde das Gel durch Besprühen mit wässriger 2M NaCl-Lösung so gewaschen, dass in Summe nur 20.5 kg Lösungsmittel verbraucht wurden, um ein spezifikationsgerechtes Produkt herzustellen.

**Tabelle 3: Gegenüberstellung der verwendeten Waschmengen bei gleicher Wascheffizienz:**

| | |
|---|---|
| Stand der Technik | 43.2 2M NaCl-Lösung |
| a) | 32.0 2M NaCl-Lösung |
| b) | 20.5 2M NaCl-Lösung |

### Beispiel 5: Wasser-Wäsche:

*Stand der Technik (siehe auch Vorschrift in* Polymer Preprints 2000; 41(1), 735*):* Um 727 g getrocknetes Colesevelam Hydrochlorid herzustellen, wurde das reprotonierte Gel nach erfolgter MeOH- und NaCl-Wäsche mit 44 kg entionisiertem Wasser via Suspensions- oder Verdrängungswäsche gewaschen.
a): Basierend auf dem Ansatz mit einer Größe von 1900 g Rohgel (entspricht ca. 730 g getrocknetem Colesevelam Hydrochlorid) wurden 6 Wäschen mit je 4.97 kg (in Summe 29.8 kg) entionisiertem Wasser durchgeführt, wobei nach jedem Waschschritt vollständig abfiltriert wurde.
b): Basierend auf dem Ansatz mit einer Größe von 1900 g Rohgel (entspricht ca. 730 g getrocknetem Colesevelam Hydrochlorid) wurde das Gel durch Besprühen oder Aufbringen mit entionisiertem Wasser so gewaschen, dass in Summe nur 13.2 kg Lösungsmittel verbraucht wurden, um ein spezifikationsgerechtes Produkt herzustellen.

**Tabelle 4: Gegenüberstellung der verwendeten Waschmengen - Aufgabe war es, die gleiche Wascheffizienz zu erreichen:**

| | |
|---|---|
| Stand der Technik | 44.0 kg entionisiertes Wasser |
| a) | 29.8 kg entionisiertes Wasser |
| b) | 13.2 kg entionisiertes Wasser |

### Beispiel 6: Herstellung von (6-Bromhexyl)-trimethylammoniumbromid

In einen Reaktor wurden 494kg (5606 mol) Ethylacetat und 244kg (1000 mol) 1,6-Dibromhexan unter Rühren und gleichzeitigem Aufheizen auf 60°C chargiert. Es wurden bei 1 bar 64kg (1080 mol) Trimethylamin innerhalb von 3 Stunden zudosiert. Nach einer Nachreaktionszeit von weiteren 3 h wurde das Reaktionsgemisch abgekühlt und über eine Nutsche filtriert und das erhaltene Kristallisat mit Ethylacetat nachgewaschen. Nach erfolgtem Trocknen wurden 288 kg (95,1%) (6-Bromhexyl)-trimethylammoniumbromid von 99,8 %iger Reinheit erhalten.

### Beispiel 7: Herstellung von (I) mittels einer Temperaturrampe & umgekehrte Chargierreihenfolge

In einen Reaktor wurden 314kg Ethylacetat, 29kg Trimethylamin und 108,5kg 1,6-Dibromhexah bei 11°C chargiert. Es wurde innerhalb von 2-3 Stunden auf 40°C erwärmt. Nach einer. Reaktionszeit von weiteren 6-7 h wurde das Reaktionsgemisch nochmals innerhalb von 2-3 Stunden auf 60°C erwärmt und anschließend abgekühlt und über eine Nutsche filtriert. Das erhaltene Kristallisat wurde mit Ethylacetat nachgewaschen. Nach erfolgtem Trocknen auf der Nutsche wurden 130,0 kg (96,5%) (6-Bromhexyl)-trimethylammoniumbromid von 100 %iger Reinheit erhalten.

### Beispiel 8: Verkürztes Temperatur-Programm (Verkürzte Aufheizzeiten)

In einen Reaktor wurden 3390kg Ethylacetat, 452kg Trimethylamin und 1673kg 1,6-Dibromhexan bei 15°C chargiert. Es wurde innerhalb von 0,5 Stunden auf 40°C erwärmt. Nach einer Reaktionszeit von weiteren 7 h wurde das Reaktionsgemisch nochmals innerhalb von 0,5-1 Stunde auf 60°C erwärmt und anschließend abgekühlt und über ein Bandfilter filtriert. Das erhaltene Kristallisat wurde mit Ethylacetat nachgewaschen. Nach erfolgtem Trocknen wurden 2028kg (97,6%) (6-Bromhexyl)-trimethylammoniumbromid von 99,8 % iger Reinheit erhalten.

## Patentansprüche

1. Verfahren zur Herstellung alkylierter N-bzw. Amino-, Ammonium oder spirobicyclische Ammoniumgruppen haltiger, vernetzter Polymeregele, **dadurch gekennzeichnet, dass** ein durch Polymerisation und Vernetzung erhaltenes, ausgeliertes und geschnittenes Rohgel
a) in einem Rührkessel oder in einer Rührfilternutsche mit Methanol gewaschen wird, wobei die Lösungsmittelzufuhr vom Boden des Rührkessels oder der Rührfilternutsche oder über Kopf in den Rührkessel oder in die Rührfilternutsche und die Absaugung des verbrauchten Waschmediums über ein Tauchrohr erfolgt und
b) das so gewaschene Rohgel im Anschluss daran mit einem Alkylator alkyliert wird, worauf
c) eine Methanol-/Natriumchloridwäsche in einer kontinuierlich betriebenen Waschkolonne oder in einem Waschturm oder Rührkessel durchgeführt wird, wobei der Gelkuchen nach Filtration der Gelsuspension als statisches oder gerührtes Bett vorliegt und die Methanol-/Natriumchloridlösung zufuhr vom Boden her erfolgt und die Absaugung der überstehenden waschflüssigkeit über ein Tauchrohr, und sodann
d) eine Natriumchloridwäsche und eine Wasserwäsche durch Besprühen des Gelbettes mit der Waschlösung oder durch Suspensionswäsche in einer Rührfilternutsche oder in einem Rührkessel oder in einer kontinuierlich betriebenen Waschkolonne durchgeführt wird.

## Claims

1. Process for the preparation of alkylated N- or amino, ammonium or spirobicyclic ammonium group- containing, crosslinked polymer gels, **characterized in that** a gelled and cut crude gel obtained by polymerization and crosslinkage
a) is washed in a stirring vessel or in a stirred suction filter with methanol, the solvent supply taking place from the bottom of the stirring vessel or the stirred suction filter or via the top in the stirring vessel or in the stirred suction filter and the aspiration of the used wash medium taking place via a dip tube and
b) the crude gel washed in this way is alkylated with an alkylator following this, whereupon
c) a methanol/sodium chloride wash is carried out in a continuously operated wash column or in a wash tower or stirring vessel, the gel cake being present after filtration of the gel suspension as a static or stirred bed and the supply of methanol/sodium chloride solution taking place from the bottom and the aspiration of the supernatant washing liquid taking place via a dip tube, and then
d) a sodium chloride wash and a water wash is carried out by spraying the gel bed with the washing solution or by suspension washes in a stirred suction filter or in a stirring vessel or in a continuously operated wash column.

## Revendications

1. Procédé de fabrication de gels polymères réticulés contenant des groupes N ou amino, ammonium ou ammonium spirobicycliques alkylés, **caractérisé en ce qu'**un gel brut obtenu par polymérisation et réticulation, gélifié et découpé
a) est lavé dans une cuve agitée ou dans un filtre à vide agité avec du méthanol, l'introduction du solvant ayant lieu depuis le fond de la cuve agitée ou du filtre à vide agité ou par la tête de la cuve agitée ou du filtre à vide agité et l'aspiration de l'agent de lavage usagé ayant lieu par un tube d'immersion, et
b) le gel brut ainsi lavé est ensuite alkylé avec un alkylateur, puis
c) un lavage au méthanol/chlorure de sodium est réalisé dans une colonne de lavage exploitée en continu ou dans une tour de lavage ou une cuve agitée, le gâteau de gel après la filtration de la suspension de gel se présentant sous la forme d'un lit statique ou agité et l'introduction de la solution de méthanol/chlorure de sodium ayant lieu depuis le fond et l'aspiration du liquide de lavage surnageant ayant lieu par un tube d'immersion, puis
d) un lavage au chlorure de sodium et un lavage à l'eau sont réalisés par pulvérisation du lit de gel avec la solution de lavage ou par lavage en suspension dans un filtre à vide agité ou dans une cuve agitée ou dans une colonne de lavage exploitée en continu.
